# EUROPÄISCHE PATENTSCHRIFT

(11) **EP 2 616 788 B1**
(45) Veröffentlichungstag und Bekanntmachung des Hinweises auf die Patenterteilung: **22.06.2016**
(21) Anmeldenummer: 11754663.0
(22) Anmeldetag: 08.09.2011
(51) Int. Cl.: G01L 7/16, G01L 19/12, H01H 35/34, H01H 35/38

(54) **FEDERAKTIVIERTE OPTISCHE DRUCKANZEIGEEINRICHTUNG**
SPRING-ACTIVATED OPTICAL PRESSURE DISPLAY DEVICE
DISPOSITIF OPTIQUE INDICATEUR DE PRESSION ACTIVÉ PAR RESSORT

(30) Priorität: 16.09.2010 DE 102010045564
(43) Veröffentlichungstag der Anmeldung: 24.07.2013
(73) Patentinhaber: KNORR-BREMSE Systeme für Schienenfahrzeuge GmbH, 80809 München (DE)
(72) Erfinder: KNOSS, Rainer, 80797 München (DE); LOUCA, Sebastian, 80799 München (DE)
(74) Vertreter: Schönmann, Kurt
(86) Internationale Anmeldenummer: PCT/EP2011/065578
(87) Internationale Veröffentlichungsnummer: WO 2012/034927

(56) Entgegenhaltungen:
- DE-A1- 2 030 210
- GB-A- 458 124
- GB-A- 491 900
- GB-A- 1 558 414
- US-A- 3 247 824
- US-A- 3 910 223
- US-A- 4 010 708
- US-A- 4 240 372

## Beschreibung

Die Erfindung betrifft eine optische Druckanzeigeeinrichtung mit einem mechanisch entlang eines Anzeigeweges bewegbaren Zeiger, der nach Maßgabe eines über einen Druckanschluss anliegenden Steuerdrucks p zur Absolutdruckanzeige derart verstellbar ist, dass eine langsame Druckänderung einen zumindest abschnittsweise zügigen Stellungswechsel des Zeigers herbeiführt.

Das Einsatzgebiet der Erfindung erstreckt sich vornehmlich auf die Schienenfahrzeugtechnik. Durch geltende Vorschriften ist es erforderlich, dass der in einem pneumatischen Bremssystem herrschende Vorratsluftdruck durch eine äußere am Schienenfahrzeug, beispielsweise eines Wagens, sichtbare optische Druckanzeige ablesbar ist, um festzustellen, ob im Wagen genügend Vorratsluftdruck zum Betätigen der Bremsen vorhanden ist. Die optische Druckanzeige ist dabei meist binär ausgestaltet. So zeigt ein über eine Fensteröffnung sichtbarer Zeiger mit einem roten Feld an, dass nicht genügend Luftdruck zur Verfügung steht, wogegen die Anzeige eines grünen Feldes signalisiert, dass genügend Luftdruck anliegt. Bei einer solchen binären Anzeige sind Zwischenstellungen des Zeigers deshalb nicht zulässig, weil hierdurch eine unklare Information über den Druckzustand erfolgen würde.

Aus diesen Gründen darf der Zeiger bei langsamen Druckänderungen nicht kontinuierlich der Druckänderung folgen, sondern hat bei Erreichen eines den Grenzwert darstellenden Schaltsteuerdrucks pₛ zügig von einer Stellung in die andere Stellung zu wechseln. Alternativ ist es ausreichend, wenn erkennbar ist, dass sich die Druckanzeige gerade ändert.

Gemäß des allgemein bekannten Standes der Technik wird dieses Erfordernis gewöhnlich durch zusätzliche Stelleinrichtungen erfüllt. So werden bei elektrischen Anzeigevorrichtungen die Druckänderungen kontinuierlich durch einen Drucksensor erfasst, die Anzeige wird jedoch unter Einbindung eines Elektromotors verwirklicht, um hiermit den gefordert zügigen Stellungswechsel des Zeigers der Druckanzeige herbeizuführen.

Nachteilhaft bei diesem Stand der Technik erscheint das Erfordernis der Bereitstellung zusätzlicher Hilfsenergie durch den Elektromotor als Stellantrieb. Des weiteren ist die optische Druckanzeigeeinrichtung auch mit einem elektrischen Anschluss zur Versorgung mit Betriebsenergie auszustatten, was darüber hinaus auch eine entsprechende elektrische Verkabelung erfordert.

Die GB 1558414 offenbart eine Flüssigkeitsdruckanzeige, umfassend ein Gehäuseelement, das an einer Vorrichtung befestigt werden kann, die einen Flüssigkeitsdruck aufweist, und mit seinem Innenraum kommuniziert. Ferner umfasst die Flüssigkeitsdruckanzeige ein Kolbenteil, das relativ zum Gehäuseelement zwischen einer inneren und einer äußeren Position beweglich ist. Das Kolbenelement ist dazu geeignet während der Nutzung der Vorrichtung durch den Flüssigkeitsdruck in Richtung der letzten Position gedrückt zu werden. Zwischen dem Gehäuseelement und dem Kolbenelement ist eine wasserdichte Dichtung angeordnet. Ein Tellerfederelement im Gehäuseelement weist einen äußeren Rand, der in Verbindung mit einem Element steht, und einen zentralen Bereich, der in Verbindung mit einem anderen Element steht, auf. Die Bewegung des Kolbenelements von einer zur anderen Position bewirkt eine Durchbiegung des Tellerfederelements von einem nach außen konvexen Zustand in einen nach außen konkaven Zustand, oder umgekehrt. Dabei weist das Tellerfederelement einen vorher festgelegten Widerstand gegenüber der Bewegung des Kolbenelements aus der inneren zur äußeren Position auf, der mittels Flüssigkeitsdruck überwunden wird und über einem vorher festgelegten Minimalwert liegt.

Ferner geht aus der GB 491900 ein druckbetriebenes Relais hervor. Das Relais ist zum Betrieb mittels Druckänderungen eines Gases, ober- oder unterhalb eines normalen Wertes, in einem Gehäuse geeignet. Das Gehäuse umfasst eine durch eine bewegliche Wand gebildete Kammer, die ein variables Volumen unter Änderung des Drucks aufweist, einen mit der beweglichen Wand wirkverbundenen Schalter, ein durch die Bewegung der Wand bedienbares Ventil, und eine sich in der beweglichen Wand befindliche Ventilöffnung. Durch eine Änderung des Drucks im Gehäuse werden der Schalter betätigt und das Ventil geöffnet. Weist der Druck im Gehäuse einen normalen Wert auf, stellt sich durch die Öffnung des Ventils der Schalter und das Ventil in den Ausgangszustand.

Die DE 2030210 offenbart einen Schalter, insbesondere zum Unterbrechen und Schließen eines elektrischen Stromkreises mit einem kippbar gelagerten und von einem Messfühler direkt oder indirekt bewegbaren das eine Kontaktstück aufweisenden Hebel, der von einer Feder in die eine oder andere Endstellung gedrückt wird. Der Hebel ist zur Übertragung der Bewegung des Messfühlers auf das den elektrischen Kontakt vermittelnde Teil in seinem Schwerpunkt drehbar gelagert.

Die GB 458124 offenbart ein Warnsignal für zwei unabhängige pneumatische Bremssysteme, umfassend jeweils mindestens einen mit den jeweiligen Systemen verbundenen Zylinder, Kolben, die sich in den Zylindern unter Luftdruck bewegen, und einen schwenkbaren Hebel, der an seinen Enden mit den Kolben und mittig mit dem beweglichen Teil eines Schaltermechanismus zur Überwachung des Signals verbunden ist.

Ferner offenbart die US 4010708 ein Druckgefälle-Indikator, mit einem druckdichten Gehäuse und Mitteln zum Anschließen des Gehäuseinneren in Fluiddruckverbindung an ein zu überwachendes geschlossenes Regelsystem. Der Druckgefälle-Indikatorumfasst einen im Gehäuse unter vorbestimmten Druck angeordneten geschlossenen Balg, eine im Gehäuse geradlinig zwischen einer ausgefahrenen und einer eingefahrenen Stellung hin- und herbewegbar angeordnete Welle, ein Glied zum Spannen der Welle in die ausgefahrene Stellung, lösbare Elemente zum Halten der Welle in der eingefahrenen Stellung und ein Mittel zum Verbinden der Welle und des Balgs. Das Mittel spricht auf einen vorbestimmten Druckunterschied zwischen dem Druck im Balg und dem Regelsystem an und gibt die Welle in die ausgefahrene Stellung frei, wobei die Welle einen Wellenabschnitt der Umgebung aussetzt.

Auch die DE 9317751 U offenbart ein Druckanzeigegerät, das bei Erreichen eines bestimmten vorgegebenen Druckwertes ein optisches und/oder elektrisches Signal ermöglicht. Zwischen einer in einem allseitig geschlossenen Gehäuse eingespannten beweglichen Membran und dem Oberteil dieses Gehäuses ist ein Medium ohne Lufteinschlüsse eingesperrt. Der Raum zwischen der Membran und dem Gehäuseunterteil kann über einen Anschluss mit dem anzuzeigenden Druck beaufschlagt werden, wobei das eingesperrte Medium bei Erreichen des anzuzeigenden Druckwertes seinen Zustand von flüssig auf gasförmig bzw. umgekehrt verändert.

Es ist daher die Aufgabe der vorliegenden Erfindung, eine optische Druckanzeigeeinrichtung zu schaffen, welche ohne eine solche zusätzliche Hilfsenergie auskommt und eine zügige Anzeigeänderung gestattet.

Die Aufgabe wird ausgehend von einer optischen Druckanzeigeeinrichtung gemäß den Ansprüchen 1, 2 und 3.

Die Erfindung schließt die technische Lehre ein, dass zum zügigen Stellungswechsel des Zeigers ein federvorgespannter Schnappmechanismus vorgesehen ist, welcher einen Stellkolben umfasst, der bei Erreichen einer durch die Steuerdruckbeaufschlagung erzeugten Auslöseposition ein mit dem Zeiger gekoppeltes Betätigungselement zu dem zügigen Stellungswechsel bringt.

Mit anderen Worten wird durch den Stellkolben zunächst ein steigender Steuerdruck in einen proportional steigenden Stellweg umgesetzt. Ab Erreichen einer Auslöseposition des Stellkolbens wird der durch den zurückliegenden Stellweg federvorgespannte Schnappmechanismus aktiviert, um anschließend den Zeiger federgetrieben zu dem zügigen Stellungswechsel zu veranlassen.

Der Vorteil der erfindungsgemäßen Lösung liegt insbesondere darin, dass hierfür keine Hilfsenergie erforderlich ist. Allein durch den Steuerdruck wird die Betriebsenergie zum Stellungswechsel des Zeigers bereitgestellt. Die erfindungsgemäße Lösung zeichnet sich durch einen einfachen und robusten konstruktiven Aufbau aus.

Gemäß eines ersten Ausführungsbeispiels der Erfindung wird vorgeschlagen, dass der Schnappmechanismus einen ersten endseitig eines vom Stellkolben ausgehenden Stößels angelenkten und an einem Wiegelager angebrachten Hebel umfasst, der seitens des distalen Endes über eine Feder mit einem ebenfalls an einem Wiegelager angebrachten zweiten Hebel verbunden ist, dessen distales Ende den Zeiger bewegt. Dieser Schnappmechanismus lehnt sich an das Lichtschalterprinzip an, der Steuerdruck bewegt im Prinzip das eine Ende eines wippgelagerten Hebels, dessen anderes Ende mit einem zweiten wippgelagerten Hebel über eine Spiralfeder oder dergleichen federnd gekoppelt ist. Am distalen Ende des zweiten wippgelagerten Hebels wird dann der Zeiger angebracht. Das Federelement bewirkt den zügigen Stellungswechsel desselben. Auch dieser Schnappmechanismus lässt sich hinsichtlich der Vorspannung einstellen, indem mit Einstellschrauben zusammenwirkende Rückstellfedern entgegen dem Steuerdruck auf den Stellkolben einwirken.

Gemäß eines zweiten - ähnlichen - Ausführungsbeispiels umfasst der Schnappmechanismus einen ersten Hebel, der an einen am Stellkolben angebrachten Stößel angelenkt ist und über eine Zugfeder mit einem ebenfalls an einem Wiegelager angebrachten zweiten Hebel verbunden ist, dessen distales Ende den Zeiger bewegt. Der Zeiger wird im Gegensatz zum vorgenannten Ausführungsbeispiel hier nicht durch Druckkraft, sondern durch Zugkraft betätigt. Die Auslöseposition lässt sich in ähnlicher Weise einstellbar gestalten.

Gemäß einem dritten bevorzugten Ausführungsbeispiel umfasst der Schnappmechanismus einen vom Stellkolben ausgehenden Stößel mit mindestens einer radialen Rastausnehmung. Die Rastausnehmung wirkt mit einer federbelasteten Sperrkugel zur Bildung einer Sperrklinke zusammen. Ab Erreichen eines Auslösesteuerdrucks am Steuerkolben überwindet die durch den Steuerdruck bewirkte Axialkraft des Stößels die Federkraft der Sperrkugel, so dass diese aus der korrespondierenden Rastausnehmung herausgedrückt wird. Durch die sich zuvor aufgebaute Vorspannung wird ein zügiger Stellungswechsel des vorzugsweise endseitig des Stößels angebrachten Zeigers durchgeführt. Hierbei kann der Zeiger auch über Gelenkstangen und gegebenenfalls Wipplager über Hebelarme bewegt werden. Eine einzige federbelastete Sperrkugel genügt zur Umsetzung dieses Schnappmechanismus. Es ist jedoch auch denkbar, mehrere - vorzugsweise einander gegenüberliegende - federbelasteter Sperrkugeln vorzusehen, um den Stößel sicher in der Endlage zu arretieren. Die jeder Sperrkugel zugeordnete Druckfeder lässt sich ebenfalls über Einstellschrauben vorspannen.

Anstelle einer Sperrkugel kann auch ein anderes Rastelement, beispielsweise eine Rolle, ein Kegelstift oder dergleichen verwendet werden.

Die Erfindung ist nicht beschränkt auf die vorstehend beschriebenen bevorzugten drei Ausführungsbeispiele. Es sind vielmehr auch Abwandlungen hiervon denkbar, welche im Schutzbereich der unabhängigen Ansprüche 1, 2 und 3 liegen.

Nachfolgend werden die drei bevorzugten Ausführungsbeispiele anhand der Figuren 5, 6 und 8 näher dargestellt. Die Figuren 1 bis 4 und 7 sind Beispiele, die die Erfindung nach den Ansprüchen 1, 2 und 3 nicht darstellen.
Fig. 1 eine schematische Seitenansicht einer optischen Druckanzeigeeinrichtung gemäß des ersten Ausführungsbeispiels,
Fig. 2 eine weitere Ausführungsform des in Fig. 1 dargestellten ersten Ausführungsbeispiels mit einstellbarer Federvorspannung,
Fig. 3 eine schematische Draufsicht der durch den Schnappmechanismus nach Fig.1 herbeigefügten Winkelverstellung des Zeigers,
Fig. 4 eine schematische Seitenansicht einer optischen Druckanzeigeeinrichtung gemäß des zweiten Ausführungsbeispiels,
Fig. 5 eine schematische Seitenansicht einer optischen Druckanzeigeeinrichtung gemäß des dritten Ausführungsbeispiels,
Fig. 6 eine schematische Seitenansicht einer optischen Druckanzeigeeinrichtung gemäß des vierten Ausführungsbeispiels,
Fig. 7 eine schematische Seitenansicht einer optischen Druckanzeigeeinrichtung gemäß des fünften Ausführungsbeispiels,
Fig. 8 eine schematische Seitenansicht einer optischen Druckanzeigeeinrichtung gemäß des sechsten Ausführungsbeispiels.

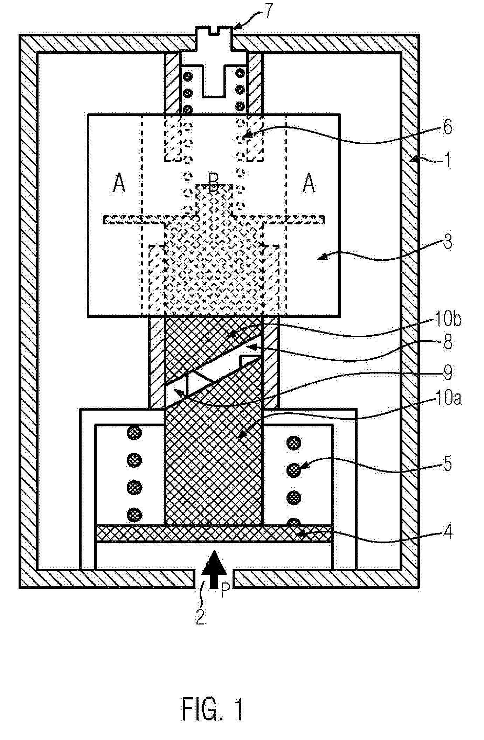

Gemäß Fig. 1 umfasst die optische Druckanzeigeeinrichtung des ersten Ausführungsbeispiels ein Gehäuse 1, an dem ein Druckanschluss 2 zur Einleitung eines Steuerdrucks p angeordnet ist. Innenseitig des Gehäuses 1 ist ein Zeiger 3 angeordnet, welcher durch Winkelverstellung abwechselnd die Felder A und B über eine - hier nicht erkennbare - Fensteröffnung im Gehäuse 1 zur Anzeige bringt. Während das Feld A das Vorhandensein signifikanten Steuerdrucks p anzeigt, zeigt das andere Fenster B einen unterschwelligen Steuerdruck p an.

Ein federvorgespannter Schnappmechanismus setzt eine langsame Druckerhöhung des Steuerdrucks p am Druckanschluss 2 ab Erreichen eines Schwellwertes in einen zügigen Stellungswechsel des Zeigers 3 um. Der federvorgespannte Schnappmechanismus umfasst einen Stellkolben 4, der bei Erreichen einer durch die Steuerdruckbeaufschlagung erzeugten axialen Auslöseposition ein mit dem Zeiger 3 gekoppeltes Betätigungsmittel zu dem zügigen Stellungswechsel bringt.

Das Betätigungsmittel ist in diesem Ausführungsbeispiel ein an späterer Stelle näher erläuterter Druckdrehkolben. Entgegen der durch den Steuerdruck p ausgeübten Kraft auf den Stellkolben 4 wirkt die Kraft einer Rückstellfeder 5. Daneben ist eine zweite Rückstellfeder 6 vorgesehen, welche zwischen dem Gehäuse 1 und dem Betätigungsmittel wirkend indirekt eine Rückstellkraft auf den Stellkolben 4 ausübt. Die zweite Rückstellfeder 6 ist dabei über eine Einstellschraube 7 hinsichtlich ihrer Kraftwirkung zur Bestimmung einer gewünschten Auslöseposition des Zeigers 3 und damit zum Grenzsteuerdruck, ab welchem der Zeiger 3 die Anzeigestellung wechselt, einstellbar.

Der Schnappmechanismus besteht aus einem Paar über eine benachbarte schiefe Ebene 8 per Verzahnung 9 zusammenwirkende Druckdrehkolben 10a und 10b. Während der untere Druckdrehkolben 10a am Stellkolben 4 angebracht ist, ist der obere Druckdrehkolben 10b zur Winkelverstellung per Rotation am Zeiger 3 angebracht. Das Wirkprinzip des so ausgebildeten Schnappmechanismus wurde vorstehend im allgemeinen Teil der Beschreibung erläutert.

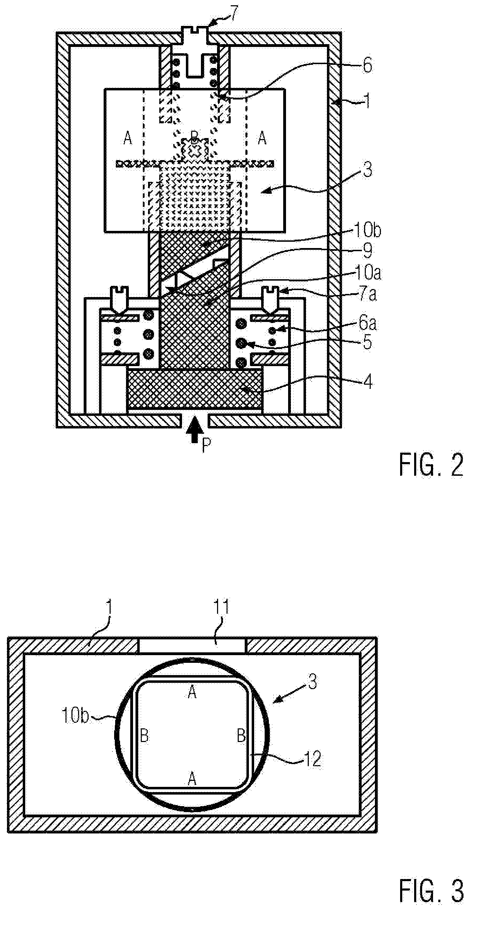

Gemäß Fig. 2 ist neben der Einstellschraube 7 zur Vorspannung der Rückstellfeder 6 stellkolbenseitig eine weitere vorspannbare Rückstellfeder 6a angeordnet, welche über eine dieser zugeordneten Einstellschraube 7a vorspannbar ist.

Nach Fig. 3 weist das Gehäuse 1 der optischen Druckanzeigeeinrichtung eine Fensteröffnung 11 auf, durch welche das Anzeigefeld A oder B des Zeigers 3 sichtbar wird. Ein Stellungswechsel erfolgt jeweils durch eine Vierteldrehung des oberen Druckdrehkolbens 10b. Dementsprechend sind die Anzeigefelder A und B an einem Vierkantabschnitt 12 angebracht.

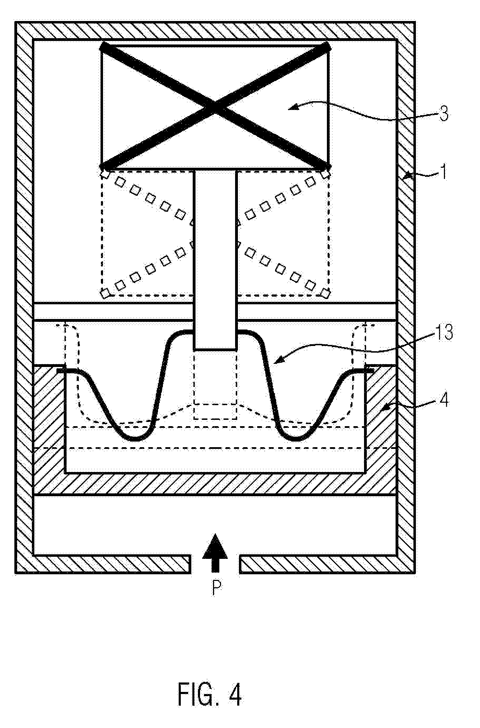

Nach Fig. 4 besteht der Schnappmechanismus aus einem Federmembranblech 13, das außenradial vom Stellkolben 4 eingefasst ist. Ein Stößel 14 trägt am distalen Ende den Zeiger 3 und ist zentral am Federmembranblech 13 befestigt. Die Strichlinie stellt die umgeschaltete Position des Zeigers 3 dar, wobei sich das Federmembranblech 13 umschnappend verformt, um in die Schaltposition zu gelangen. Durch sich aufbauenden Steuerdruck p verbiegt sich das Federmembranblech 13 durch den Stellkolben 4 an den Rändern, bis es in der Mitte umschnappt, um den zügigen Stellungswechsel des Zeigers 3 herbeizuführen.

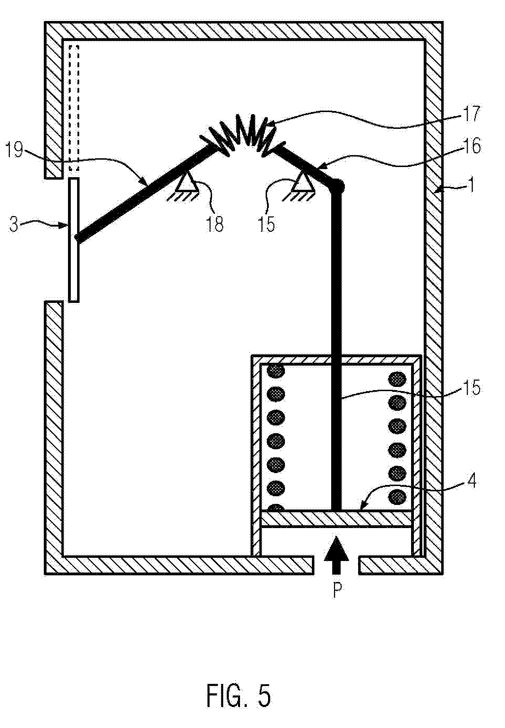

Nach Fig. 5 umfasst der Schnappmechanismus dieses Ausführungsbeispiels einen ersten endseitig eines vom Stellkolben 4 ausgehenden Stößels 14 angelenkten und an einem zugeordneten Widerlager 15 angebrachten Hebel 16 auf. Seitens des distalen Endes ist der Hebel 16 über eine Feder 17 mit einem ebenfalls an einem Widerlager 18 angebrachten zweiten Hebel 19 verbunden. Das distale Ende dieses zweiten Hebels 19 bewegt schließlich den Zeiger 3 ab Erreichen der Auslöseposition, welche durch die Feder 17 und die Hebelverhältnisse bestimmt wird.

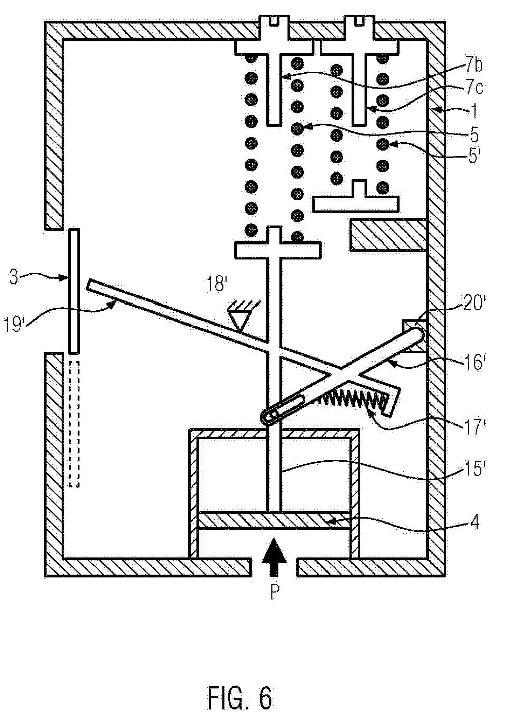

Gemäß Fig. 6 wird bei diesem dem vorstehenden Ausführungsbeispiel ähnlichen weiteren Ausführungsbeispiel anstelle einer Zugfeder eine Zugfeder 17' verwendet. Der vom Stellkolben 4 ausgehende Stößel 15' ist endseitig an einem Wiegelager 20' gehäusefest angebracht. Über die Zugfeder 17' ist der Hebel 16' mit einem zweiten Hebel 19' verbunden, der ebenfalls über ein Wiegelager 18' schwenkbar ist und dessen distales Ende den Zeiger 3 bewegt. Mit anderen Worten ist der Hebel 16' mit dem einen Ende gehäusefest am Wiegelager 20' verbunden und mit dem anderen Ende am Stößel 15'.

Über die Einstellschrauben 7b und 7c können die Vorspannungen der je zugeordneten Rückstellfedern 5 und 5' verändert werden, womit der obere und der untere Schaltpunkt der Anzeige einstellbar ist.

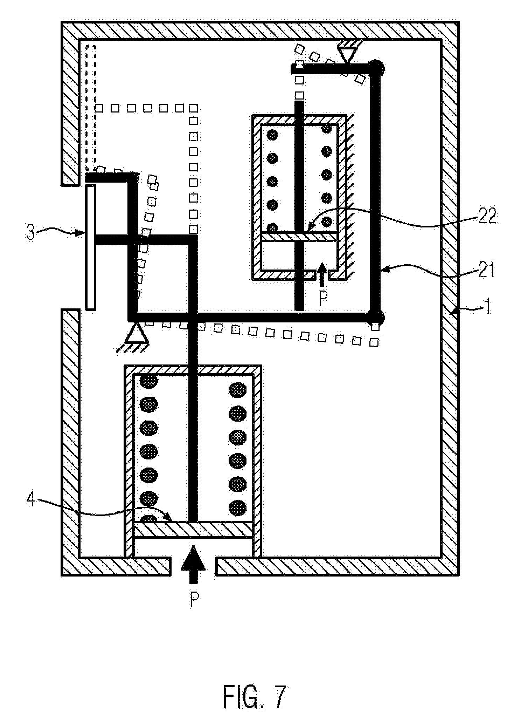

Gemäß Fig. 7 umfasst der Schnappmechanismus dieses Ausführungsbeispiels einen Kipphebel 21, der mit dem einen Ende am Zeiger 3 angreift, um dessen Stellungswechsel trotz sich aufbauenden Steuerdrucks p am Stellkolben 4 zu blockieren. Ab Erreichen der Auslöseposition des Stellkolbens 4 wird dieser ebenfalls durch den Steuerdruck p, der abgezweigt einer integrierten federrückgestellten Kolben-Zylinder-Anordnung 22 zugeführt wird, entriegelt, so dass infolge eines hierdurch bewirkten Rückschwenkens des Kipphebels 21 der zügige Stellungswechsel des Zeigers 3 durch den aufgebauten Steuerdruck p am Stellkolben 4 erfolgen kann. Die entriegelte Position des Kipphebels 21 ist durch eine Punktlinie dargestellt.

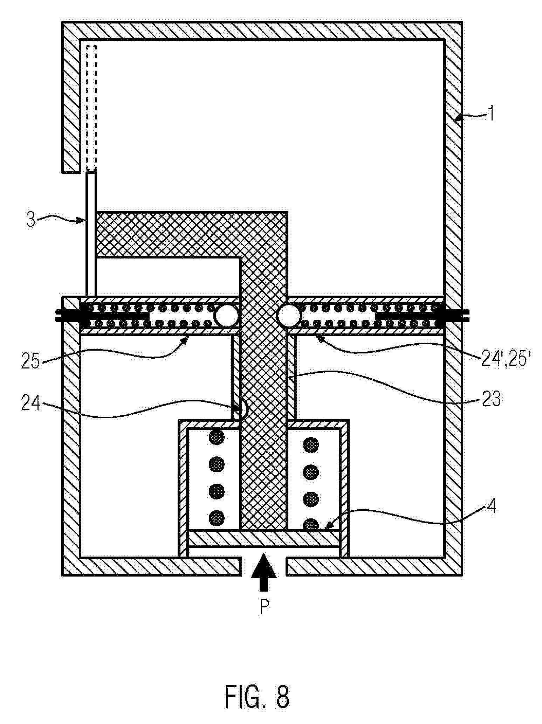

Im letzten in Fig. 8 dargestellten bevorzugten Ausführungsbeispiel besteht der Schnappmechanismus aus einem vom Stellkolben 4 ausgehenden Stößel 23, welcher eine radiale Rastausnehmung 24 umfasst. Die radiale Rastausnehmung 24 dient der Fixierung der - nicht dargestellten - oberen Stellung des Zeigers 3 (Strichlinie). In der dargestellten Position ist der Stößel 23 über eine weitere Rastausnehmung 24' mit zugeordneter federbelasteter Sperrkugel 25 arretiert. Ab Erreichen eines Auslösesteuerdrucks wird diese Arretierung jedoch selbsttätig gelöst, so dass ein zügiger Stellungswechsel des Stößels 23 und damit des hier angebrachten Zeigers 3 erfolgen kann. In der dann erreichten Endlage kommt die andere federbelastete Sperrkugel 25 mit der zugeordneten Rastausnehmung 24 in Übereinstimmung.

### Bezugszeichenliste

- 1: Gehäuse
- 2: Druckanschluss
- 3: Zeiger
- 4: Stellkolben
- 5: Rückstellfeder
- 6: Rückstellfeder
- 7: Einstellschraube
- 8: schiefe Ebene
- 9: Verzahnung
- 10: Druckdrehkolben
- 11: Fensteröffnung
- 12: Vierkantabschnitt
- 13: Federmembranblech
- 14: Stößel
- 15: Wiegelager
- 16: erster Hebel
- 17: Feder
- 18: Wiegelager
- 19: zweiter Hebel
- 20: Wiegelager
- 21: Kipphebel
- 22: Kolben-Zylinder-Einheit
- 23: Stößel
- 24: Rastausnehmung
- 25: Sperrkugel

## Patentansprüche

1. Optische Druckanzeigeeinrichtung mit einem mechanisch entlang eines Anzeigeweges bewegbaren Zeiger (3), der nach Maßgabe eines über einen Druckanschluss (2) anliegenden Steuerdrucks (p) zur Absolutdruckanzeige derart verstellbar ist, dass eine langsame Druckänderung einen zumindest abschnittsweise zügigen Stellungswechsel des Zeigers (3) herbeiführt, wobei zum zügigen Stellungswechsel des Zeigers (3) ein federvorgespannter Schnappmechanismus vorgesehen ist, welcher einen Stellkolben (4) umfasst, der bei Erreichen einer durch die Steuerdruckbeaufschlagung erzeugten Auslöseposition ein mit dem Zeiger (3) gekoppelten und vom Stellkolben (4) ausgehenden Stößel (14) zu dem zügigen Stellungswechsel bringt,
**dadurch gekennzeichnet, dass** der Schnappmechanismus einen ersten endseitig des Stößels (14) angelenkten und an einem Wiegelager (15) angebrachten Hebel (16) umfasst, der seitens des distalen Endes über eine Feder (17) mit einem ebenfalls an einem Wiegelager (18) angebrachten zweiten Hebel (19) verbunden ist, dessen distales Ende den Zeiger (3) bewegt.

2. Optische Druckanzeigeeinrichtung mit einem mechanisch entlang eines Anzeigeweges bewegbaren Zeiger (3), der nach Maßgabe eines über einen Druckanschluss (2) anliegenden Steuerdrucks (p) zur Absolutdruckanzeige derart verstellbar ist, dass eine langsame Druckänderung einen zumindest abschnittsweise zügigen Stellungswechsel des Zeigers (3) herbeiführt, wobei zum zügigen Stellungswechsel des Zeigers (3) ein federvorgespannter Schnappmechanismus vorgesehen ist, welcher einen Stellkolben (4) umfasst, der bei Erreichen einer durch die Steuerdruckbeaufschlagung erzeugten Auslöseposition ein mit dem Zeiger (3) gekoppelten und vom Stellkolben (4) ausgehenden Stößel (14) zu dem zügigen Stellungswechsel bringt,
**dadurch gekennzeichnet, dass** der Schnappmechanismus einen ersten am Stößel (14') angelenkten und endseitig an einem gehäusefesten Wiegelager (20') angebrachten Hebel (16') umfasst, der über eine Druckfeder (17') mit einem an einem anderen gehäusefesten Wiegelager (18') angebrachten zweiten Hebel (19') verbunden ist, dessen distales Ende den Zeiger (3) bewegt.

3. Optische Druckanzeigeeinrichtung mit einem mechanisch entlang eines Anzeigeweges bewegbaren Zeiger (3), der nach Maßgabe eines über einen Druckanschluss (2) anliegenden Steuerdrucks (p) zur Absolutdruckanzeige derart verstellbar ist, dass eine langsame Druckänderung einen zumindest abschnittsweise zügigen Stellungswechsel des Zeigers (3) herbeiführt, wobei zum zügigen Stellungswechsel des Zeigers (3) ein federvorgespannter Schnappmechanismus vorgesehen ist, welcher einen Stellkolben (4) umfasst, der bei Erreichen einer durch die Steuerdruckbeaufschlagung erzeugten Auslöseposition ein mit dem Zeiger (3) gekoppelten und vom Stellkolben (4) ausgehenden Stößel (14) zu dem zügigen Stellungswechsel bringt,
**dadurch gekennzeichnet, dass** der Stößel (14) mindestens einer radialen Rastausnehmung (24; 24') aufweist, welche mit einer federbelasteten Sperrkugel (25; 25') zusammenwirkt, die bei Erreichen eines Auslösesteuerdrucks entriegelt, so dass ein zügiger Stellungswechsel des endseitig des Stößels (14) angebrachten Zeigers (3) erfolgt.

## Claims

1. Optical pressure display device comprising a pointer (3) mechanically movable along a display path, which pointer is adjustable, in accordance with a control pressure (p) applied via a pressure connector (2), for display of an absolute pressure in such a way that a slow variation of the pressure induces a change of the position of said pointer (3), which is swift at least in sections, with a spring-biased snap mechanism being provided for a swift change of the position of said pointer (3), which includes a setting piston (4) that causes a plunger (14) coupled to said pointer (3) and starting out from said setting piston (4) to perform said swift change of position when a trigger position has been reached that is generated by the application of the control pressure, **characterised in that** said snap mechanism comprises a first lever (16) articulated on the end side of said plunger (14) and mounted on a weighing bearing (15), which lever is connected via a spring (17) on the side of the distal end of a second lever (19) that is equally mounted on a weighing bearing (18), whose distal end moves said pointer (3).

2. Optical pressure display device comprising a pointer (3) mechanically movable along a display path, which pointer is adjustable, in accordance with a control pressure (p) applied via a pressure connector (2), for display of an absolute pressure in such a way that a slow variation of the pressure induces a change of the position of said pointer (3), which is swift at least in sections, with a spring-biased snap mechanism being provided for a swift change of the position of said pointer (3), which includes a setting piston (4) that causes a plunger (14) coupled to said pointer (3) and starting out from said setting piston (4) to perform said swift change of position when a trigger position has been reached that is generated by the application of the control pressure, **characterised in that** said snap mechanism comprises a first lever (16') articulated on said plunger (14') and mounted on the terminal side on a weighing bearing (20') fixedly mounted to a housing, which lever is connected via a compression spring (17') to a second lever (19') that is fixed on another weighing bearing (18') fixedly mounted to the housing, whose distal end moves said pointer (3).

3. Optical pressure display device comprising a pointer (3) mechanically movable along a display path, which pointer is adjustable, in accordance with a control pressure (p) applied via a pressure connector (2), for display of an absolute pressure in such a way that a slow variation of the pressure induces a change of the position of said pointer (3), which is swift at least in sections, with a spring-biased snap mechanism being provided for a swift change of the position of said pointer (3), which includes a setting piston (4) that causes a plunger (14) coupled to said pointer (3) and starting out from said setting piston (4) to perform said swift change of position when a trigger position has been reached that is generated by the application of the control pressure, **characterised in that** said plunger (14) comprises at least one radial snapping recess (24; 24') that interacts with a spring-loaded blocking sphere (25; 25') which, when a trigger control pressure is reached, unlocks such that a swift change of position of said pointer (3) takes place, which is mounted on the terminal side of said plunger (14).

## Revendications

1. Dispositif optique indicateur de pression, comprenant une aiguille (3) à mouvement mécanique le long d'une voie d'affichage, qui est ajustable, en correspondance avec une pression de commande (p) appliquée via un connecteur de pression (2), pour l'affichage d'une pression absolue d'une telle manière, qu'une variation lente de la pression induit un changement de position de ladite aiguille (3), qui est rapide au moins section par section, à un mécanisme à clip étant prévu pour un changement rapide de la position de ladite aiguille (3), qui renferme un piston de réglage (4), qui cause un coulisseau (14) accouplé à ladite aiguille (3) et partant dudit piston de réglage (4) à réaliser ledit changement rapide de la position, quand une position de déclenchement est atteint, qui est engendrée par l'application de la pression de commande,
**caractérisé en ce que** ledit mécanisme à clip comprend un premier levier (16) articulé du côté d'extrémité dudit coulisseau (14) et monté à un palier de pesage (15), ce levier étant relié via un ressort (17) du côté de l"extrémité distale d'un deuxième levier (19), qui est également monté à un palier de pesage (18), dont l'extrémité distale déplace ladite aiguille (3).

2. Dispositif optique indicateur de pression, comprenant une aiguille (3) à mouvement mécanique le long d'une voie d'affichage, qui est ajustable, en correspondance avec une pression de commande (p) appliquée via un connecteur de pression (2), pour l'affichage d'une pression absolue d'une telle manière, qu'une variation lente de la pression induit un changement de position de ladite aiguille (3), qui est rapide au moins section par section, à un mécanisme à clip étant prévu pour un changement rapide de la position de ladite aiguille (3), qui renferme un piston de réglage (4), qui cause un coulisseau (14) accouplé à ladite aiguille (3) et partant dudit piston de réglage (4) à réaliser ledit changement rapide de la position, quand une position de déclenchement est atteint, qui est engendrée par l'application de la pression de commande,
**caractérisé en ce que** ledit mécanisme à clip comprend un premier levier (16') articulé audit coulisseau (14) et monté au côté terminal à un palier de pesage (20') disposé, de manière fixe, à un carter, ce levier étant relié via un ressort de compression (17') à un deuxième levier (19') qui est fixé à un autre palier de pesage (18') monté, de manière fixe, audit carter, dont l'extrémité distale déplace ladite aiguille (3).

3. Dispositif optique indicateur de pression, comprenant une aiguille (3) à mouvement mécanique le long d'une voie d'affichage, qui est ajustable, en correspondance avec une pression de commande (p) appliquée via un connecteur de pression (2), pour l'affichage d'une pression absolue d'une telle manière, qu'une variation lente de la pression induit un changement de position de ladite aiguille (3), qui est rapide au moins section par section, à un mécanisme à clip étant prévu pour un changement rapide de la position de ladite aiguille (3), qui renferme un piston de réglage (4), qui cause un coulisseau (14) accouplé à ladite aiguille (3) et partant dudit piston de réglage (4) à réaliser ledit changement rapide de la position, quand une position de déclenchement est atteint, qui est engendrée par l'application de la pression de commande,
**caractérisé en ce que** ledit coulisseau (14) comprend au moins un évidement à clic radial (24 ; 24'), qui coopère avec une sphère d'arrêt sollicitée par ressort (25 ; 25'), qui, dès qu'une pression de commande de déclenchement est atteinte, déverrouille d'une telle façon, qu'un changement rapide de la position de ladite aiguille (3) ait lieu, qui est montée du côté terminal dudit coulisseau (14).
